# EUROPÄISCHE PATENTSCHRIFT

(11) **EP 1 922 942 B1**
(45) Veröffentlichungstag und Bekanntmachung des Hinweises auf die Patenterteilung: **11.08.2010**
(21) Anmeldenummer: 07020461.5
(22) Anmeldetag: 19.10.2007
(51) Int. Cl.: A23N 17/00

(54) **Vorrichtung zum Herstellen von Futtermittel und/oder Brennstoff durch Zusammenpressen von Pflanzenmaterialien**
Device for manufacturing fodder and/or fuel by compressing plant material
Dispositif de fabrication de nourriture pour animaux et/ou de combustible par tassement de matières végétales

(30) Priorität: 25.10.2006 CZ 20060679
(43) Veröffentlichungstag der Anmeldung: 21.05.2008
(73) Patentinhaber: Spolek pro ekologické bydlení Obcanské sdruzení, 29429 Brezovice (CZ)
(72) Erfinder: Hana, Maresová, 29425 Katusice (CZ); Lubomír, Verner, Ing., 29425 Katusice (CZ)
(74) Vertreter: Chlustina, Jiri

(56) Entgegenhaltungen:
- CZ-U1- 15 312
- DE-A1-102004 051 971
- US-A- 1 514 271
- US-A- 3 417 800

## Beschreibung

### Gebiet der Technik

Die Erfindung betrifft eine Vorrichtung zum Herstellen von Futtermittel und/oder Brennstoff durch Zusammenpressen von Pflanzenmaterialien, die aus einer Matrize in der Form eines Rings mit axial angeordneten Bohrungen von kreisrundem Durchschnitt besteht, an deren Mündungen zumindest ein Abrollkörper anliegt, wobei die einzelnen Bohrungen aus einem an die Mündung anschließenden kegelförmigen Einlauf und einem anschließenden Walzenabschnitt der Bohrung bestehen und die Länge des kegelförmigen Einlaufs 15 % bis 30 % der Gesamtlänge der Bohrung beträgt. Eine solche Vorrichtung ist aus CZ-15 312 U bekannt.

### Stand der Technik

Die Nutzung der Pflanzenmaterialien, z.B. Abfälle, die beim Reinigen von Samen von Agrarpflanzen auf den Feldern anfallen, ist bis jetzt unbefriedigend. Bei dem Reinigen von Samen von Agrarpflanzen, wie die Getreidepflanzen, Ölfrüchte, Hülsenfrüchtler, Faserpflanzen und Heilpflanzen sind, in Reinigungseinrichtungen entstehen Abfälle, die aus den abgeriebenen Teilen der Samen, aus den winzigen Samen, aus den Bruchteilen von anderen Pflanzenteilen, aus den Samen von unkultivierten Pflanzen und Staubteilchen bestehen. Diese Abfälle werden bis jetzt auf den Deponien liquidiert und als Läger für Vieh, bzw. in einer vernachlässigbaren Menge als Ballastfutter für Wildtier benutzt. Eine unmittelbare Verfutterung dieser Abfälle durch Haustiere hat sich infolge der schlechten Verdaulichkeit dieser Abfälle nicht bewährt.

Ähnlich hat sich auch die unmittelbare Verbrennung dieser Abfälle in den gängigen Verbrennungsanlagen nicht bewährt, da infolge der im wesentlichen staubförmigen Beschaffenheit dieser Abfälle eine Drosselung der Verbrennung in einer gängigen Verbrennungsanlage erfolgt. Für eine unmittelbare Verbrennung dieser Abfälle wäre daher eine spezielle Verbrennungsanlage, z.B. eine Wirbelschicht-Verbrennungsanlage nötig, die aber nicht üblich und ziemlich kostenintensiv ist.

Ein weiteres mit diesen Abfällen verbundenes Problem ist das große Volumen dieser Abfälle, d.h. ihre geringe Dichte, wodurch die Beförderungskosten erhöht werden. Es wurden darum schon Versuche mit Herstellung von gepressten Pelleten aus diesen Abfällen in einer Vorrichtung gemacht, die aus einer Matrize in der Form eines Rings mit axial angeordneten Bohrungen von kreisförmigem Durchschnitt besteht, an deren Mündungen zumindest ein Abrollkörper anliegt, wobei die einzelnen Bohrungen aus einem an die Mündung anschließenden kegelförmigen Einlauf und einem anschließenden Walzenabschnitt der Bohrung bestehen und die Länge des kegelförmigen Einlaufs 15 % bis 30 % der Gesamtlänge der Bohrung beträgt. Es hat sich aber gezeigt, dass bei Verwendung einer Vorrichtung dieser Art mit den bekannten Bohrungen, die ein Verhältnis des Durchmessers des Walzenabschnitts der Bohrung zu der Gesamtlänge der Bohrung in dem Umfang von 1:8 bis 1:10 aufweisen, wird infolge der staubförmigen Beschaffenheit dieser Abfälle nicht ein Druck erreicht, der zur ausreichendem Zusammenhalt der hergestellten Pelleten, bzw. zur Auflösung der inneren Struktur dieser Abfälle nötig ist, um eine ausreichende Verdaulichkeit dieser Abfälle zu erreichen. Die erwähnten Probleme betreffen mehr oder weiniger auch andere Pflanzenmaterialien, wie die Kaff, zermälmte überirdische Teile von Pflanzen oder Sägespäne, Reste aus der industriellen Verarbeitung von Bodenfrüchten u. ähnlich sind, für die die erfindungsgemäße Lösung ebenfalls bestimmt ist.

Die Aufgabe der Erfindung ist daher eine Vorrichtung zum Herstellen von Futtermittel und/oder Brennstoff durch Zusammenpressen von Pflanzenmaterialien, z.B. der Abfälle aus der Reinigung der Samen von Agrarpflanzen zu schaffen, die einen höheren Zusammenhalt der hergestellten Pelleten zwecks deren Verbrennung, bzw. eine bessere Verdaulichkeit zwecks deren Verfutterung ermöglicht.

### Wesen der Erfindung

Diese Aufgabe wird gelöst und die Nachteile der bekannten Vorrichtungen der eingangs genannten Art werden größtenteils beseitigt durch eine Vorrichtung zum Herstellen von Futtermittel und/oder Brennstoff durch Zusammenpressen von Pflanzenmaterialien, die aus einer Matrize in der Form eines Rings mit axial angeordneten Bohrungen von kreisrundem Durchschnitt besteht, an deren Mündungen zumindest ein Abrollkörper anliegt, wobei die einzelnen Bohrungen aus einem an die Mündung anschließenden kegelförmigen Einlauf und einem anschließenden Walzenabschnitt der Bohrung bestehen und die Länge des kegelförmigen Einlaufs 15 % bis 30 % der Gesamtlänge der Bohrung beträgt, dadurch gekennzeichnet, dass auf der unteren, von den kegelförmigen Einläufen der Bohrungen abgewandten Seite der Matrize zumindest eine Zusatzmatrize angeordnet ist, in der in einem genauen Zusammenfallen mit den Bohrungen der Matrize ebenfalls axial angeordnete Bohrungen mit dem gleichem Durchschnitt ausgebildet sind, wobei die Matrize mit der zumindest einen Zusatzmatrize lösbar verbunden ist.

Durch diese Maßnahmen wird eine Möglichkeit der operativen Einstellung der Gesamtlänge der Bohrungen entsprechend den Betriebsbedingungen und der Art und der Beschaffenheit des zu verarbeiteten Materials erreicht.

Die beschriebene Vorrichtung ermöglicht auf diese Weise eine effiziente Herstellung von Futtermittel oder Brennstoff z.B. aus den Abfällen aus der Reinigung der Samen von Agrarpflanzen, wobei auch möglich ist, dass diese Abfälle aus der Reinigung der Samen von Agrarpflanzen durch bis zu 10 Gew.-%, bezogen auf das Gesamtgewicht des Futtermittels oder Brennstoffs, einer weiteren verfutterbaren oder verbrennbaren Komponente pflanzlicher oder tierischer Herkunft ergänzt werden.

Die Abfälle aus der Reinigung der Samen von Agrarpflanzen werden also durch die erfindungsgemäße Vorrichtung in die Form von Pelleten oder Briketten verpresst. Diese Pelleten oder Briketten also enthalten die zusammengepressten Abfälle aus der Reinigung der Samen. Während der Herstellung der Pelleten oder Briketten kann zu der Masse der erwähnten Abfälle weitere verfutterbaren oder verbrennbaren Komponente pflanzlicher oder mineralischer Herkunft zugesetzt werden, und zwar in der Menge bis zu 10 Gew.-%, bezogen auf das Gesamtgewicht des Futtermittels oder Brennstoffs. Es kann sich um den zermalmten getrockneten Hanf oder Säuerling, beziehungsweise um zermalmtes und getrocknetes Heu oder perrenierende Pflanzen und andere handeln. Unter den tierischen Materialien sind insbesondere die Abfälle aus Schlachthof und andere verfutterbare Materialien tierischer Herkunft zu nennen. Ähnlich können den Brennstoff verbrennbare organische oder anorganische Zugaben zugesetzt werden.

Es ist weiter von Vorteil, wenn die Matrize mit der zumindest einer Zusatzmatrize mittels axial angeordneter Spannschrauben verbunden ist, die durch die entsprechenden Bohrungen beim Umfang der Matrizen durchgehen. Dadurch wird eine genaue und zuverlässige Verbindung der Matrizen miteinander erreicht.

Weitere Einzelheiten und Merkmale der Erfindung sind aus der folgenden Beschreibung von Ausführungsbeispielen unter Bezugnahme auf die Zeichnungen ersichtlich. Es zeigen:
- Fig. 1: Draufsicht auf die Matrize mit axial angeordneten Bohrungen,
- Fig. 2: Axialschnitt durch die Matrize gemäß Fig. 1 mit axial angeordneten Bohrungen und drei Zusatzmatrizen, in Seitenansicht.

### Ausführungsbeispiele der Erfindung

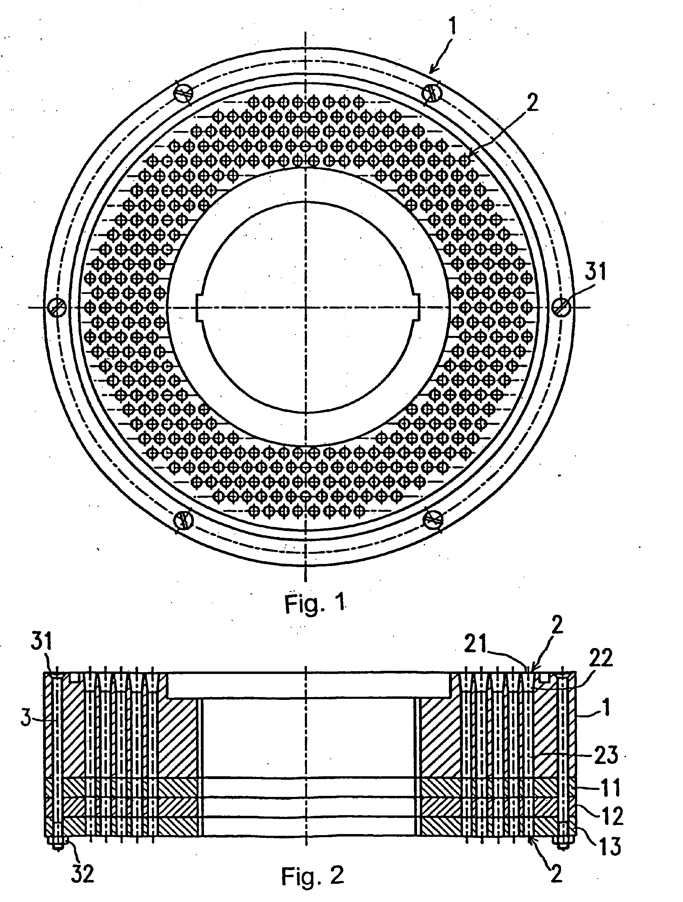

Die erfindungsgemäße Vorrichtung zum Herstellen von Futtermittel und/oder Brennstoff durch Zusammenpressen von Pflanzenmaterialien, z.B. der Abfälle aus der Reinigung der Samen von Agrarpflanzen, besteht nach Fig. 1 aus einer Matrize 1 in der Form eines Rings mit axial angeordneten Bohrungen 2 von kreisrundem Durchschnitt, an deren Mündungen 21 zumindest ein hier nicht gezeigter Abrollkörper, z.B. in Walzenform, anliegt, der sich unter Andruck an der Kreisbahn auf der Stirnseite der Matrize 1 abrollt und die Abfälle in die Mündungen 21 der einzelnen Bohrungen 2 nach Fig. 2 hineinpresst, wo die Abfälle zunächst in dem kegelförmigen Einlauf 22 der Bohrung 2 verdichtet und weiter in den Walzenabschnitt 23 dieser Bohrung 2 geführt werden, wo die in dem kegelförmigen Einlauf 22 erreichte Verdichtung fertiggestellt und stabilisiert wird. Die einzelnen Bohrungen 2 bestehen also aus einem kegelförmigen Einlauf 22, der an die Mündung 21 anschließt, und aus einem anschließenden Walzenabschnitt 23 der Bohrung 2, wobei die Länge des kegelförmigen Einlaufs 22 15 % bis 30 % der Gesamtlänge der Bohrung 2 beträgt. Wesentlich ist dabei, dass das Verhältnis des Durchmessers des Walzenabschnitts 23 der Bohrung 2 zu der Gesamtlänge der Bohrung 2 in einem gewissen Umfang, z.B. von 1:11 bis 1:14 liegt. Es hat sich überraschend gezeigt, dass bei auf diese Weise ausgebildeten Bohrungen 2, die im Vergleich mit den Bohrungen aus dem Stande der Technik gewöhnlich merkbar schlanker sind, eine unerwartet disproportionell erhöhte Verdichtung der Abfälle erreicht wird, was eine vorteilhafte Erhöhung des Zusammenhaltens der hergestellten Pelleten mit sich bringt, die als Brennstoff dienen, bzw. in einer erhöhten Zerstörung der Innenstruktur der Abfälle resultiert, womit die Verdaulichkeit der hergestellte Pelleten verbessert wird, wenn diese als Futtermittel dienen.

Nur beispielhaft kann in diesem Zusammenhang angeführt werden, dass der Durchmesser der Bohrung 2 in dem Bereich ihrer Walzenabschnitts gewöhnlich 6 bis 20 mm beträgt, was auch dann der Durchmesser der hergestellten Pelleten ist.

Dem Obenangeführten ist entnehmbar, dass für den Pelletisierungsprozess in der Abhängigkeit von der Art des verarbeiteten Pflanzenmaterials, dessen Feuchtigkeit, Inhalt an gewissen Bestandteilen u.ä. das erwähnte Verhältnis des erwähnten Durchmessers zu der Gesamtlänge der Bohrung 2, bzw. beim gegebenen Durchmesser diese Gesamtlänge der Bohrung 2, wesentlich ist. Es ist also eine Möglichkeit der operativen Änderungen der Gesamtlänge der Bohrung 2 in der Abhängigkeit von diesen Eigenschaften und Beschaffenheit des verarbeiteten Pflanzenmaterials wünschenswert. Die Matrize 1 besteht aus einem hochwertigen Material mit der veredelten Oberfläche auf der oberen Seite und es sind in dieser Matrize 1 hunderte von genauen Bohrungen 2 mit kegelförmigen Einläufen 22 ausgebildet, sodass diese Matrize 1 ziemlich kostenintensiv ist und wahrscheinlich kaum möglich ist kontinuierlich auf dem Lager eine Reihe von Matrizen 1 mit verschiedenen Dicken, bzw. mit verschiedenen Durchmessern der Bohrungen 2 zu halten. Ein weiteres Problem besteht in der Tatsache, dass nach einem längeren Betrieb der Matrize 1 ein gewisser Einlauf der oberen Seite der Matrize 1 mit den nicht dargestellten Abrollkörpern und dadurch bedingte Leistungserhöhung der ganzen Vorrichtung erfolgt, was durch einen Austausch der Matrize 1 durch eine andere Matrize mit einer anderen Dicke gestört würde.

Die Lösung dieses Problems besteht erfindungsgemäß darin, dass die Matrize 1 eine gewisse Grunddicke aufweist, die beim Durchmesser der Walzenabschnitte 23 der Bohrungen 2 von zum Beispiel 12 mm beispielsweise 70 mm betragen kann, wobei diese Matrize 1 nach Bedarf von unten durch die an die Matrize 1 anliegenden Zusatzmatrizen 11, 12, 13 ergänzt wird, die jeweils eine Dicke von zum Beispiel 15 mm aufweisen, wie dies in Fig. 2 dargelegt ist. In diesen Zusatzmatrizen 11, 12, 13 sind ebenfalls Bohrungen 2 mit dem gleichen Durchmesser ausgebildet, und zwar in einer genauen Übereinstimmung mit den Bohrungen 2 in der Matrize 1. Diese Bohrungen 2 in den Zusatzmatrizen 11, 12, 13 sind über ihre ganze Länge walzenförmig, d.h. sie keine kegelförmigen Einläufe 22 wie die Bohrungen 2 in der Matrize 1 aufweisen.

Die Matrize 1 ist mit der Zusatzmatrize oder Zusatzmatrizen 11, 12, 13 mittels zum Beispiel Spannschrauben 3 verbunden, die in Fig. 2 sichtbar sind und die durch entsprechende Axialbohrungen durchgehen, die mit regelmäßigen Winkelabständen an dem äußeren Umfang der Matrizen 1, 11, 12, 13 verteilt sind. Diese Spannschrauben 3 sind zum Beispiel mit in die obere Seite der Matrize 1 eingesenkten Kegelköpfen 31 versehen und werden durch die Schraubenmutter 32 angezogen.

Die beschriebene erfindungsmassige Lösung ermöglicht eine operative Einstellung der Gesamtlänge der Bohrungen 2 in der Abhängigkeit von den Betriebsbedingungen und der Art und Beschaffenheit des verarbeiteten Materials.

Die vorliegende Lösung nach Erfindung ermöglicht eine ökologisch und ökonomisch vorteilhafte Verwertung von Pflanzenmaterialien. Das gewonnene Futtermittel in der Form von Pelleten oder Briketten kann in einer Mehrheit von konventionellen Züchtungen von Haustieren verfuttert werden. Ähnlich, der gewonnene Brennstoff kann problemlos in einer Mehrheit von konventionellen Verbrennungsanlagen verbrannt werden.

## Patentansprüche

1. Vorrichtung zum Herstellen von Futtermittel und/oder Brennstoff durch Zusammenpressen von Pflanzenmaterialien, die aus einer Matrize (1) in der Form eines Rings mit axial angeordneten Bohrungen (2) von kreisrundem Durchschnitt besteht, an deren Mündungen (21) zumindest ein Abrollkörper anliegt, wobei die einzelnen Bohrungen (2) aus einem an die Mündung (21) anschließenden kegelförmigen Einlauf (22) und einem anschließenden Walzenabschnitt (23) der Bohrung bestehen und die Länge des kegelförmigen Einlaufs (22) 15 % bis 30 % der Gesamtlänge der Bohrung (2) beträgt, **dadurch gekennzeichnet, dass** auf der unteren, von den kegelförmigen Einläufen (22) der Bohrungen (2) abgewandten Seite der Matrize zumindest eine Zusatzmatrize (11, 12, 13) angeordnet ist, in der in einem genauen Zusammenfallen mit den Bohrungen (2) der Matrize (1) ebenfalls axial angeordnete Bohrungen (2) mit dem gleichem Durchschnitt ausgebildet sind, wobei die Matrize (1) mit der zumindest einen Zusatzmatrize (11, 12, 13) lösbar verbunden ist.

2. Vorrichtung nach Anspruch 1, **dadurch gekennzeichnet, dass** die Matrize (1) mit der zumindest einer Zusatzmatrize (11, 12, 13) mittels axial angeordneter Spannschrauben (3) verbunden ist, die durch die entsprechenden Bohrungen beim Umfang der Matrizen (1, 11, 12, 13) durchgehen.

## Claims

1. A device for producing fodder and/or fuel by means of pressing botanical materials comprising of a matrix (1) shaped as a ring with a plurality of separate axially laid out channels (2) designed with a circular cross-section onto mouths (21) thereof on which fits at least one rolling-off body, with each of the separate channels (2) including a conical entering/tapering end (22) connected to the mouths (21) and a linked up cylindrical channel section (23) of each channel (2), with the conical entering/tapering end length being equal to from 15% to 30% of the total channel length (2); **characterized in that** at least one additional matrix (11, 12, 13) is positioned below the conical entering/tapering end (22) of the channels (2) of an averted side of the matrix (1), with the at least one additional matrix (11, 12, 13) including the axially laid out channels (2) with identical cross-section in an exact alignment with the channels (2) of the matrix (1), and the matrix (1) is connected with the at least one additional matrix (11, 12, 13) in a way in which the at least one additional matrix (11, 12, 13) can be dismantled or knocked down.

2. The device according to the claim 1, **characterized in that** the matrix (1) is connected with at least one additional matrix (11, 12, 13) in such way that the connection can be dismantled by removal of axially laid out clamping bolts (3) which pass through the corresponding holes along the external periphery of the matrices (1, 11, 12, 13).

## Revendications

1. Le dispositif pour de production de fourrage et/où de carburant par moyens de pressage des matières végétales, comprenant une matrice (1) en forme de la bague avec de canaux séparés disposés axialement (2) conçus avec des sections circulaires et au moins un corps de rouler qui correspond aux bouches des canaux (21) et chacun des canaux séparés se composent d'une entrée conique (22) dont la longueur est égale à 15% à 30% de la longueur totale du canal (2) connecté à la bouche(21) et une section cylindrique (23) de canal (2) relié et le dispositif est **caractérisé par** au moins une matrice supplémentaire (11, 12, 13) placé dans la côté basse de la matrice (1) détournée des entrées coniques (22) des canaux (2), comprenant des canaux à l'identique de section disposés axialement (2) dans un alignement précis avec les canaux (2) de la matrice (1), et la matrice (1) est reliée à au moins une matrice supplémentaire (11, 12, 13) par un assemblage démontable.

2. Le dispositif selon la revendication 1 **caractérisé par** la matrice (1) est relié à au moins une matrice supplémentaire (11, 12, 13) d'un assemblage, qui peut être démonté par enlèvement des serrages des boulons axialement disposés (3), qui passent à travers les trous correspondants dans le pourtour extérieur de la matrice (1, 11, 12, 13).
